# EUROPÄISCHE PATENTSCHRIFT

(11) **EP 2 398 350 B1**
(45) Veröffentlichungstag und Bekanntmachung des Hinweises auf die Patenterteilung: **04.09.2013**
(21) Anmeldenummer: 10702274.1
(22) Anmeldetag: 26.01.2010
(51) Int. Cl.: A47B 88/00, F16B 12/46

(54) **ECKVERBINDUNG**
CORNER CONNECTION
ASSEMBLAGE D'ANGLE

(30) Priorität: 17.02.2009 DE 202009002242 U
(43) Veröffentlichungstag der Anmeldung: 28.12.2011
(73) Patentinhaber: Paul Hettich GmbH & Co. KG, 32278 Kirchlengern (DE)
(72) Erfinder: SCHUBERT, Michael, 40215 Düsseldorf (DE); STELZER, Christian, 49080 Osnabrück (DE); BAUM, Jürgen, 33813 Oerlinghausen (DE)
(74) Vertreter: Dantz, Jan Henning
(86) Internationale Anmeldenummer: PCT/EP2010/050857
(87) Internationale Veröffentlichungsnummer: WO 2010/094532

(56) Entgegenhaltungen:
- EP-B1- 1 427 310
- EP-B1- 1 516 561
- DE-A1- 3 713 254
- DE-U1- 20 307 353
- DE-U1- 29 511 111
- US-A- 5 265 953

## Beschreibung

Die vorliegende Erfindung betrifft eine Eckverbindung, nach dem Oberbegriff des Anspruches 1.

Die DE 298 09 751 offenbart einen Winkelverbinder für Platten, der zwei winklig angeordnete Aufnahmen aufweist, die eine Platte stirnseitig umgreifen. An jeder Aufnahme ist ein nach innen gerichteter Steg zur Führung der Platte ausgebildet. Beim Einschieben der Platte sind Toleranzen erforderlich, so dass eine solche Eckverbindung für bewegbare Möbelteile, wie Schubkästen, nur begrenzt geeignet ist.

Um bei einem Schubkasten einen Zargenaufsatz mit einer Rückwand zu verbinden, ist aus der EP 1 516 561 eine Halterung bekannt, die eine Aufnahme zum Einstecken des Zargenaufsatzes aufweist. Die Halterung ist dann mit einer Rückwand verbunden, die an einem Pfosten festgelegt ist. Die Aufnahme ist dabei an die Kontur des Zargenaufsatzes angepasst und für jeden Zargenaufsatz muss ein eigenes Verbindungselement bereitgehalten werden.

In der EP 1 427 310 ist eine Schublade mit einer abnehmbaren Aufsatzzarge offenbart, wobei im Eckbereich eine Halterung zur Montage des Zargenaufsatzes an einer Rückwand vorgesehen ist. Der Zargenaufsatz ist dabei von einem Stellexzenter durchgriffen, der von außen sichtbar ist. Die Halterung ist dabei mit der Rückwand verschraubt oder verrastet, wobei solche Verbindungsmittel nur begrenzt Kräfte übertragen können.

Die DE 295 11 111 offenbart eine Schublade, bei der ein Beschlagskörper zur Verbindung einer Rückwand mit einer Seitenzarge vorgesehen ist. Hierfür ist an dem Beschlagskörper ein in die Seitenzarge einsteckbarer Haken und eine Aufnahmenut für die Rückwand ausgebildet, wobei die Rückwand über einen Zapfenträger an dem Beschlagskörper gesichert wird.

Es ist daher Aufgabe der vorliegenden Erfindung, eine Eckverbindung zu schaffen, mittels der zwei winklig angeordnete Wandelemente stabil miteinander verbunden werden können, wobei eine leichte Montage durchführbar ist.

Diese Aufgabe wird mit einer Eckverbindung mit den Merkmalen des Anspruches 1 gelöst.

Erfindungsgemäß umfasst die Eckverbindung zur Montage eines ersten Wandelementes an einem zweiten Element einen Verbinder, in den ein Halteelement einsteckbar ist, mittels dem das zweite Wandelement an dem Verbinder festlegbar ist. Das Halteelement ist dabei als U-förmige Klammer ausgebildet, die eine Stirnkante des zweiten Wandelementes umgreift. Dadurch kann das zweite Wandelement, insbesondere ein Zargenaufsatz eines Schubkastens, auf einfache Weise an dem Verbinder montiert werden. Das Halteelement kann dabei unabhängig von dem Material oder der Geometrie des zweiten Wandelementes für eine Befestigung an dem Halteelement sorgen, so dass eine flexible und einfache Montage möglich ist.

Gemäß einer bevorzugten Ausgestaltung der Erfindung ist an dem Halteelement mindestens ein Vorsprung ausgebildet, der in eine Öffnung an dem zweiten Element eingreift, denn insbesondere dient das Halteelement zur Montage von harten, schwer zu bearbeitenden Werkstücken, wie Glasplatten, so dass durch die Ausbildung einer Öffnung in dem zweiten Wandelement eine einfache Festlegung durch Einfügen eines Vorsprunges in diese Öffnung möglich ist. Dabei kann an jedem Schenkel der U-förmigen Klammer auf der nach innen gewandten Seite ein Rastmittel vorgesehen sein, so dass die Position des Halteelementes an dem zweiten Wandelement fixierbar ist. Die Rastmittel können dabei in der Öffnung des zweiten Wandelementes angeordnet sein.

Für eine einfache Montage des zweiten Wandelementes über das Halteelement ist dieses vorzugsweise mit dem Verbinder verschraubt. Dadurch kann eine stabile Festlegung des zweiten Wandelementes an dem Verbinder erfolgen, ohne dass das Material des zweiten Wandelementes in aufwändiger Weise bearbeitet werden muss.

Vorzugsweise weist der Verbinder eine stegförmige Vertiefung zum Einfügen des Halteelementes an dem zweiten Wandelement auf. Dadurch kann das Halteelement in die Vertiefung eingeschoben werden, so dass eine Führung des zweiten Wandelementes und des Halteelementes an dem Verbinder vorhanden ist und eine einfache Positionierung erfolgen kann. Damit der Verbindungsbereich auch optisch ansprechend ausgestaltet ist, kann das Halteelement in der montierten Position des zweiten Wandelementes vollständig in der Vertiefung des Verbinders aufgenommen sein. Dadurch sind Befestigungsmittel von außen nicht sichtbar.

Die Eckverbindung bildet eine kraftschlüssige Verbindung zwischen dem ersten Wandelement und dem zweiten Wandelement aus. Somit können Kräfte über das zweite Wandelement und der Eckverbindung in das zweite Wandelement eingeleitet werden.

In einer weiteren Ausgestaltung ist an dem Verbinder eine Führung zum Einschieben des ersten Wandelementes ausgebildet. Das erste Wandelement kann dabei über ein Rastelement an dem Verbinder lösbar fixiert sein. Vorzugsweise ist das erste Wandelement dabei aus einem Metallblech hergestellt, so dass über den Einsatz eines zusätzlichen Rastelements eine einfache Montage des Verbinders an dem ersten Wandelement ermöglicht wird. Das zweite Wandelement besteht vorzugsweise aus einem harten Werkstoff, wie einer Platte aus Glas, Keramik und/oder Stein, so dass eine einfache Verbindung über das Halteelement und den Verbinder geschaffen wird. Das Rastelement und das Halteelement sind vorzugsweise aus einem elastischen Material, insbesondere aus Kunststoff, hergestellt.

Die Erfindung wird nachfolgend anhand eines Ausführungsbeispieles mit Bezug auf die beigefügten Zeichnungen näher erläutert. Es zeigen:

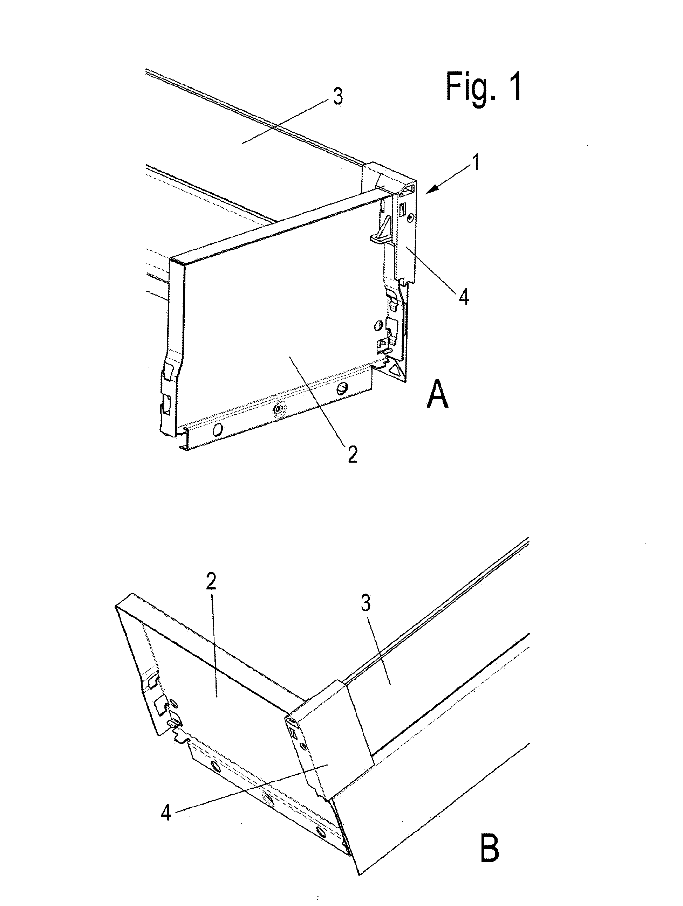

- Figuren 1A und 1 B: zwei perspektivische Ansichten eines erfindungsgemäßen Ausführungsbeispieles einer Eckverbindung;
- Figur 2: eine Explosionsdarstellung der Eckverbindung der Figuren 1;
- Figur 3: eine geschnittene Seitenansicht des Eckverbinders bei der Montage gemäß Figur 2, und

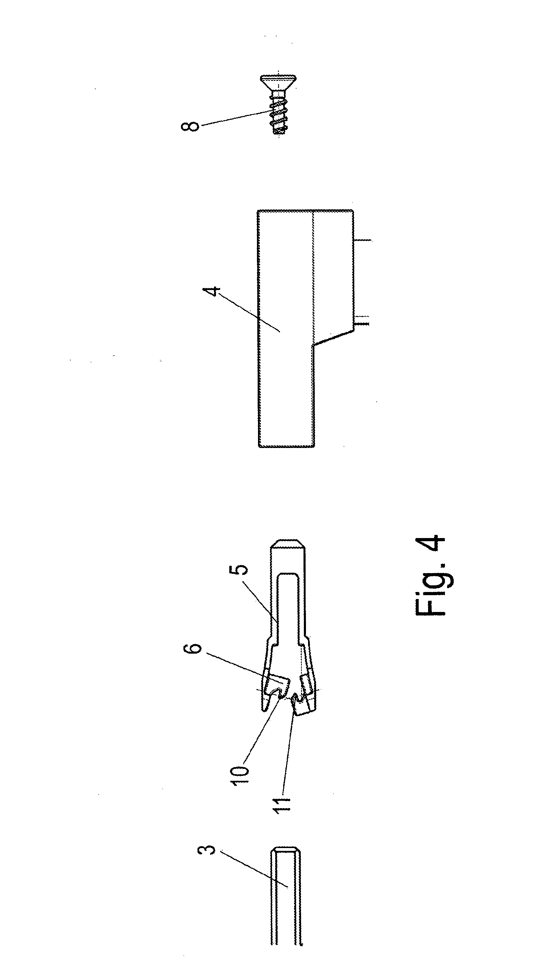

- Figur 4: eine Draufsicht auf den Eckverbinder der Figur 2.

Eine Eckverbindung 1, insbesondere an einem Schubkasten, dient zur Verbindung eines ersten Wandelementes 2 mit einem zweiten Wandelement 3. Das erste Wandelement 2 kann beispielsweise als Rückwand des Schubkastens ausgebildet sein und aus einem gebogenen Metallblech hergestellt sein. Das zweite Wandelement 3 ist als Seitenwand des Schubkastens oder als obere Aufsatzzarge ausgebildet und besteht aus einem harten Werkstoff, insbesondere aus Glas.

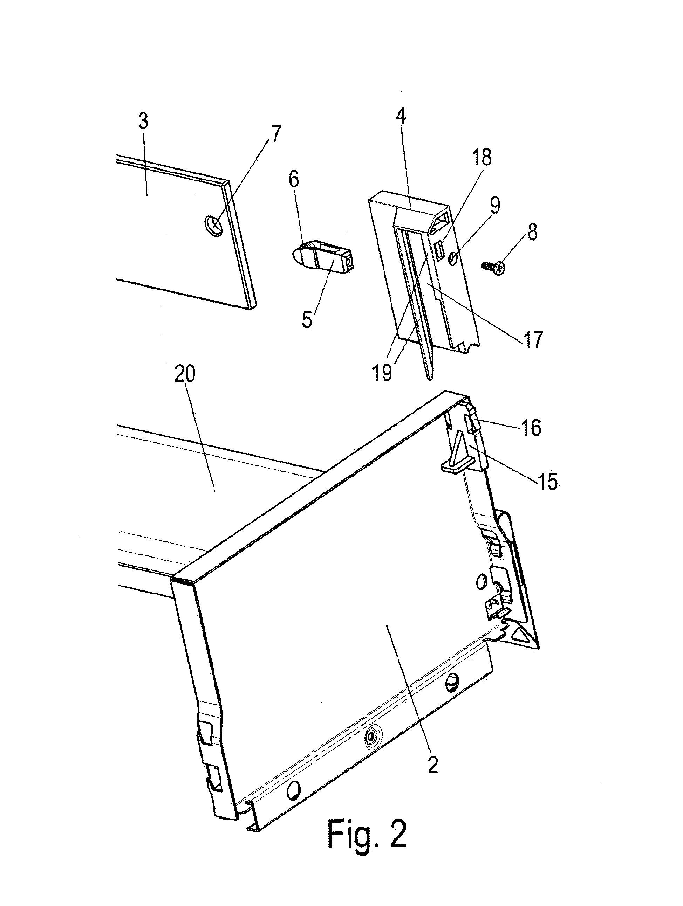

Wie in Figur 2 zu sehen ist, wird das zweite Wandelement 3 über ein Halteelement 5 an dem Verbinder 4 befestigt. Das Halteelement 5 ist als U-förmige Klammer aus Kunststoff hergestellt, wobei an den Schenkeln des Halteelementes 5 auf der nach innen gewandten Seite jeweils ein Vorsprung 6 ausgebildet ist, der in eine Öffnung 7 an dem zweiten Wandelement 3 einfügbar ist. Die U-förmige Klammer kann somit um eine Stirnseite des zweiten Wandelementes 3 aufgesteckt werden, um das zweite Wandelement 3 an dem Verbinder 4 zu montieren.

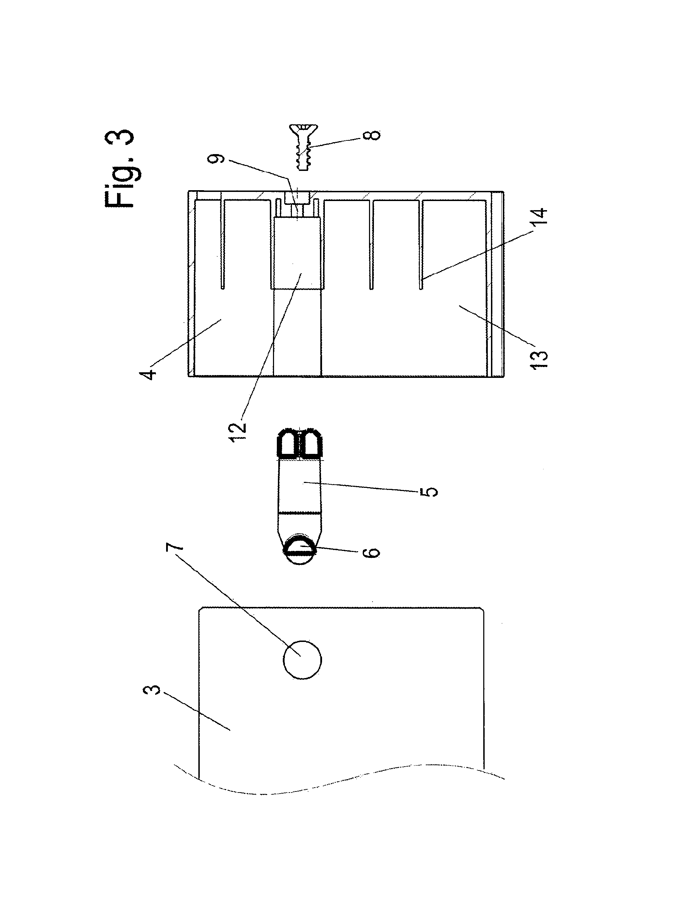

Wie in Figur 3 zu sehen ist, weist der Verbinder 4 eine Aufnahme 13 zum Einstecken des zweiten Wandelementes 3 auf, wobei im Bereich des Halteelementes 5 eine stegförmige Vertiefung 12 ausgebildet ist. Das Haltelement 5 kann in der montierten Position vollständig in die stegförmige Vertiefung 12 eingesteckt werden, wobei an einer Rückwand des Verbinders 4 auf der zu dem zweiten Wandelement 3 abgewandten Seite eine Öffnung 9 zum Eindrehen einer Befestigungsschraube 8 ausgebildet ist. Die Befestigungsschraube 8 wird von der Rückseite in den Verbinder 4 und das Halteelement 5 eingeschraubt, um das zweite Wandelement 3 stabil an dem Verbinder 4 zu befestigen.

In einer Aufnahme 13 an dem Verbinder 4 für das zweite Wandelement 3 sind dabei Stege 14 ausgebildet, die einen Anschlag ausbilden, so dass das zweite Wandelement 3 mit einer Stirnseite nur bis zu den Stegen 14 einschiebbar ist. Das Halteelement 5 steht dabei über das zweite Wandelement 3 hervor und ist an der Rückwand mittels der Schraube 8 festgelegt.

Die Befestigung des ersten Wandelementes 2 an dem Verbinder 4 erfolgt durch Einschieben einer Stirnseite des ersten Wandelementes 2 an einer Führung 17, die durch zwei an gegenüberliegenden Seiten ausgebildete Stege 19 gebildet ist. Ferner ist ein Rastelement 15 vorgesehen, das aus Kunststoff hergestellt ist und in einer oberen Ecke des ersten Wandelementes 2 positioniert ist. Das Rastelement 15 wird zusammen mit dem ersten Wandelement 2 in die Führung 17 eingeschoben, bis ein federnder Steg 16 des Rastelementes 15 in eine Öffnung 18 an dem Verbinder 4 einrastet. In dieser Position ist das erste Wandelement 2 gegen ein Herausziehen aus dem Verbinder 4 gesichert, wobei über das Rastelement 15 eine form- und kraftschlüssige Festlegung erfolgt.

Zum Lösen des ersten Wandelementes 2 von dem Verbinder 4 kann der federnde Steg 16 über ein Werkzeug eingedrückt werden, damit dann der Verbinder 4 nach oben entlang der Führung 17 herausgezogen werden kann. Dadurch lässt sich ein montierter Schubkasten auch wieder demontieren, ohne dass Verbindungselemente zerstört werden müssten. Der Verbinder 4 dient zur lösbaren Befestigung eines zweiten Wandelementes 3, das insbesondere als Aufsatzzarge ausgebildet ist und oberhalb einer unteren Seitenwand 20 angeordnet ist, die an dem ersten Wandelement 2 befestigt ist.

In dem dargestellten Ausfühnmgsbeispiel erfolgt die Festlegung des ersten Wandelementes 2 über ein separat ausgebildetes Rastmittel 15, das zusammen mit einer Stirnseite des ersten Wandelements 2 in eine Führung 17 des Verbinders 4 eingeschoben wird. Es ist natürlich auch möglich, die Rastmittel integral mit dem ersten Wandelement 2 auszubilden, um auf die Ausbildung eines separaten Rastmittels 15 zu verzichten.

Die Festlegung des zweiten Wandelements 3 erfolgt über ein Halteelement 5, wobei bei größeren Wandelementen 3 auch mehrere Öffnungen 7 für mehrere Halteelemente 5 vorgesehen sein können, die dann vorzugsweise über mehrere Schrauben 8 an dem Verbinder 4 festgelegt werden.

### Bezugszeichenliste

- 1: Eckverbindung
- 2: Erstes Wandelement
- 3: Zweites Wandelement
- 4: Verbinder
- 5: Halteelement
- 6: Vorsprung
- 7: Öffnung
- 8: Befestigungsschraube
- 9: Öffnung
- 12: Vertiefung
- 13: Aufnahme
- 14: Steg
- 15: Rastelement
- 16: Steg
- 17: Führung
- 18: Öffnung
- 20: Seitenwand

## Patentansprüche

1. Eckverbindung (1), insbesondere für einen Schubkasten, mit einem ersten Wandelement (2) und einen winklig dazu angeordneten zweiten Wandelement (3), wobei ein Verbinder (4) vorgesehen ist, der auf das erste Wandelement (2) aufsteckbar ist und eine Aufnahme zum Einfügen des zweiten Wandelementes (3) aufweist, wobei in den Verbinder (4) ein Halteelement (5) einsteckbar ist, mittels dem das zweite Wandelement (3) an dem Verbinder (4) festlegbar ist, **dadurch gekennzeichnet, dass** das Halteelement (5) als U-förmige Klammer ausgebildet ist, die eine Stirnkante des zweiten Wandelements (3) umgreift.

2. Eckverbindung nach Anspruch 1, **dadurch gekennzeichnet, dass** an dem Halteelement (5) mindestens ein Vorsprung (6) ausgebildet ist, der in eine Öffnung (7) in dem zweiten Wandelement (3) eingreift.

3. Eckverbindung nach Anspruch 1 oder 2, **dadurch gekennzeichnet, dass** an jedem Schenkel der U-förmigen Klammer auf der nach innen gewandten Seite ein Rastmittel vorgesehen ist.

4. Eckverbindung nach Anspruch 3, **dadurch gekennzeichnet, dass** die Rastmittel in einer Öffnung in dem zweiten Wandelement (3) angeordnet sind.

5. Eckverbindung nach einem der Ansprüche 1 bis 4, **dadurch gekennzeichnet, dass** das Halteelement (5) mit dem Verbinder (4) verschraubt ist.

6. Eckverbindung nach einem der Ansprüche 1 bis 5, **dadurch gekennzeichnet, dass** der Verbinder (4) eine stegförmige Vertiefung (12) zum Einfügen des Halteelementes (5) an dem zweiten Wandelement (3) aufweist.

7. Eckverbindung nach Anspruch 6, **dadurch gekennzeichnet, dass** das Halteelement (5) in der montierten Position des zweiten Wandelementes (3) vollständig in der Vertiefung (12) aufgenommen ist.

8. Eckverbindung nach einem der Ansprüche 1 bis 7, **dadurch gekennzeichnet, dass** an dem Verbinder (4) eine Führung (17) zum Einschieben des ersten Wandelementes (2) ausgebildet ist.

9. Eckverbindung nach einem der Ansprüche 1 bis 8, **dadurch gekennzeichnet, dass** zur Festlegung des ersten Wandelements (2) ein Rastelement (15) an dem Verbinder (4) lösbar fixiert ist.

10. Eckverbindung nach einem der Ansprüche 1 bis 9, **dadurch gekennzeichnet, dass** das zweite Wandelement (3) aus Glas, Keramik und/oder Stein hergestellt ist.

11. Eckverbindung nach einem der Ansprüche 1 bis 10, **dadurch gekennzeichnet, dass** das erste Wandelement (2) aus einem Metallblech hergestellt ist.

12. Eckverbindung nach einem der Ansprüche 1 bis 11, **dadurch gekennzeichnet, dass** das Rastelement (15) und/oder das Halteelement (5) aus Kunststoff hergestellt ist.

## Claims

1. A corner connection (1), especially for a drawer, comprising a first wall element (2) and a second wall element (3) arranged at an angle thereto, wherein a connector (4) is provided which can be inserted onto the first wall element (2) and comprises a receiver for inserting the second wall element (3), wherein a holding element (5) can be inserted into the connector (4), by means of which the second wall element (3) can be fixed to the connector (4), **characterized in that** the holding element (5) is arranged as a U-shaped clamp which engages behind a face edge of the second wall element (3).

2. A corner connection according to claim 1, **characterized in that** at least one projection (6) is arranged on the holding element (5), which projection engages in an opening (7) in the second wall element (3).

3. A corner connection according to claim 1 or 2, **characterized in that** a latching means is provided on each leg of the U-shaped clamp on the inwardly facing side.

4. A corner connection according to claim 3, **characterized in that** the latching means are arranged in an opening in the second wall element (3).

5. A corner connection according to one of the claims 1 to 4, **characterized in that** the holding element (5) is screwed together with the connector (4).

6. A corner connection according to one of the claims 1 to 5, **characterized in that** the connector (4) comprises a web-like depression (12) for inserting the holding element (5) in the second wall element (3).

7. A corner connection according to claim 6, **characterized in that** the holding element (5) is completely accommodated in the depression (12) in the mounted position of the second wall element (3).

8. A corner connection according to one of the claims 1 to 7, **characterized in that** a guide (17) for inserting the first wall element (2) is arranged on the connector (4).

9. A corner connection according to one of the claims 1 to 8, **characterized in that** a latching element (15) is releasably fixed to the connector (4) for fixing the first wall element (2).

10. A corner connection according to one of the claims 1 to 9, **characterized in that** the second wall element (3) is made of glass, ceramics and/or stone.

11. A corner connection according to one of the claims 1 to 10, **characterized in that** the first wall element (2) is made of a sheet metal.

12. A corner connection according to one of the claims 1 to 11, **characterized in that** the latching element (15) and/or the holding element (5) is made of plastic.

## Revendications

1. Dispositif d'assemblage d'angle (1), en particulier pour un tiroir, comprenant un premier élément formant paroi (2) et un deuxième élément formant paroi (3) disposé selon un certain angle par rapport au premier élément formant paroi, sachant qu'un raccord (4) est prévu, lequel peut être emboîté sur le premier élément formant paroi (2) et présente un logement aux fins de l'insertion du deuxième élément formant paroi (3), sachant que peut être enfiché dans le raccord (4) un élément de maintien (5), au moyen duquel le deuxième élément formant paroi (3) peut être fixé au niveau du raccord (4), **caractérisé en ce que** l'élément de maintien (5) est réalisé sous la forme d'une pince ayant une forme de U, laquelle saisit un bord frontal du deuxième élément formant paroi (3).

2. Dispositif d'assemblage d'angle selon la revendication 1, **caractérisé en ce qu'**est réalisée, au niveau de l'élément de maintien (5), au moins une partie faisant saillie (6), laquelle vient en prise avec une ouverture (7) dans le deuxième élément formant paroi (3).

3. Dispositif d'assemblage d'angle selon la revendication 1 ou 2, **caractérisé en ce qu'**est prévu, au niveau de chaque branche de la pince présentant une forme de U, sur le côté tourné vers l'intérieur, un moyen d'encliquetage.

4. Dispositif d'assemblage d'angle selon la revendication 3, **caractérisé en ce que** les moyens d'encliquetage sont disposés dans une ouverture dans le deuxième élément formant paroi (3).

5. Dispositif d'assemblage d'angle selon l'une quelconque des revendications 1 à 4, **caractérisé en ce que** l'élément de maintien (5) est vissé au raccord (4).

6. Dispositif d'assemblage d'angle selon l'une quelconque des revendications 1 à 5, **caractérisé en ce que** le raccord (4) présente un renfoncement (12) présentant une forme d'entretoise destiné à l'introduction de l'élément de maintien (5) au niveau du deuxième élément de paroi (3).

7. Dispositif d'assemblage d'angle selon la revendication 6, **caractérisé en ce que** l'élément de maintien (5) est logé intégralement dans le renfoncement (12) lorsque le deuxième élément formant paroi (3) est monté.

8. Dispositif d'assemblage d'angle selon l'une quelconque des revendications 1 à 7, **caractérisé en ce qu'**est réalisé, au niveau du raccord (4), un système de guidage (17) destiné à l'insertion par glissement du premier élément formant paroi (2).

9. Dispositif d'assemblage d'angle selon l'une quelconque des revendications 1 à 8, **caractérisé en ce qu'**un élément d'encliquetage (15) est fixé de manière amovible au niveau du raccord (4) aux fins de la fixation du premier élément formant paroi (2).

10. Dispositif d'assemblage d'angle selon l'une quelconque des revendications 1 à 9, **caractérisé en ce que** le deuxième élément formant paroi (3) est fabriqué en verre, en céramique et/ou en pierre.

11. Dispositif d'assemblage d'angle selon l'une quelconque des revendications 1 à 10, **caractérisé en ce que** le premier élément formant paroi (2) est fabriqué à partir d'une tôle métallique.

12. Dispositif d'assemblage d'angle selon l'une quelconque des revendications 1 à 11, **caractérisé en ce que** l'élément d'encliquetage (15) et/ou l'élément de maintien (5) sont fabriqués à partir d'une matière plastique.
